# EUROPÄISCHE PATENTSCHRIFT

(11) **EP 2 147 221 B1**
(45) Veröffentlichungstag und Bekanntmachung des Hinweises auf die Patenterteilung: **19.09.2012**
(21) Anmeldenummer: 08750245.6
(22) Anmeldetag: 09.05.2008
(51) Int. Cl.: F16B 23/00, F16B 41/00

(54) **DIEBSTAHLGESICHERTES SCHRAUBTEIL**
THEFT-PROTECTED SCREW PART
ÉLÉMENT DE VISSAGE À SÉCURITÉ ANTIVOL

(30) Priorität: 10.05.2007 DE 102007022442; 12.03.2008 DE 102008013895
(43) Veröffentlichungstag der Anmeldung: 27.01.2010
(73) Patentinhaber: ABC Umformtechnik GmbH & Co. KG, 58285 Gevelsberg (DE)
(72) Erfinder: LANNERÈE, Daniel, F-97170 Le Perreux (FR)
(74) Vertreter: Bauer Vorberg Kayser Patentanwälte
(86) Internationale Anmeldenummer: PCT/EP2008/055784
(87) Internationale Veröffentlichungsnummer: WO 2008/138907

(56) Entgegenhaltungen:
- WO-A-00/37811
- DE-A1- 19 902 192
- GB-A- 858 088

## Beschreibung

Die Erfindung bezieht sich auf ein diebstahlgesichertes Schraubteil und ein Verfahren zu seiner Herstellung.

Ein derartiges diebstahlgesichertes Schraubteil ist aus der DE 199 02 192 A1 der Anmelderin bekannt. Ein ähnliches diebstahlgesichertes Schraubteil ist aus der DE 1 041 302 C bekannt. Weitere diebstahlgesicherte Schraubteile sind in der DE 1 480 817 A und der DE 295 10 069 U1 beschrieben.

Diebstahlgesicherte Schraubteile werden unter anderem eingesetzt für die Diebstahlsicherung von Fahrzeugrädern, insbesondere Fahrzeugfelgen. Üblicherweise liefern Fahrzeughersteller ihre Fahrzeuge so aus, dass die Räder mittels normaler, handelsüblicher Schrauben oder Muttern befestigt werden. Derartige Räder kann man und soll man mit normalen Schlüsseln montieren und entfernen können, dies aber erleichtert es auch einem Dieb, die Räder zu stehlen. Es sind bereits spezielle Schraubteile bekannt, die insbesondere einen speziell ausgebildeten Kopf haben, der nur mit einem Spezialschlüssel zusammen wirkt. Dadurch kann ein ungewolltes Abschrauben des Rades wirksam behindert werden.

Bei dem Schraubteil der eingangs genannten Art ist in den Kopf eine ringförmige Vertiefung eingearbeitet. Bei dem Schraubteil nach der DE 1 041 302 C ist sie eingefräst, bei dem Schraubteil nach der DE 199 02 192 A1 bildet das Hauptstück den äußeren Rand und den Boden der Vertiefung. Das Einsatzstück bildet die inneren Anschlagflächen für den Schlüssel. Im Hauptstück ist zudem eine Aufnahmebohrung für das Einsatzstück vorgesehen. Bei der Montage wird das Eingangsstück in diese Bohrung eingepresst, dies erfolgt in einer vorgegebenen Orientierung des Einsatzstücks relativ zum Hauptstück.

Dieses letztere diebstahlgesicherte Schraubteil hat sich grundsätzlich bewährt. Es hat sich nun aber herausgestellt, dass die so hergestellten Schraubteile immer geringfügig schwerer sind als die Originalschraubteile, die ohne die Diebstahlsicherung ausgeführt sind. Das höhere Gewicht resultiert daher, dass für die Vertiefung das Schraubteil eine gewisse axiale Länge aufweisen muss, die größer ist als die axiale Abmessung des entsprechenden Normalteils ohne Diebstahlsicherung. Die größere axiale Länge wird benötigt, weil sich die Aufnahmebohrung möglichst außerhalb des eigentlichen Gewindebereichs befinden soll, denn ansonsten würde der Gewindebereich geschwächt, jedenfalls hätte er eine geringere Festigkeit als das o-riginale Schraubteil des Fahrzeugherstellers. Durch die größere axiale Länge im Bereich des Kopfes wird nun zwar vermieden, dass der Schaft und der eigentliche Schraubbereich geschwächt werden, es wird aber auch das Gewicht erhöht.

Hier setzt nun die Erfindung ein. Sie hat es sich zur Aufgabe gemacht, das diebstahlgesicherte Schraubteil der eingangs genannten Art dahingehend weiter zu entwickeln, dass bei möglichst gleich bleibender Konstruktion, insbesondere der Verschlüsselung, das Gewicht des Schraubteils so reduziert werden kann, dass es sich praktisch nicht mehr von dem Gewicht des normalen, ungesicherten Schraubteils unterscheidet.

Diese Aufgabe wird ausgehend von dem diebstahlgesicherten Schraubteil der eingangs genannten Art dadurch gelöst, dass das Hauptstück einen Vorsprung aufweist, der sich innerhalb des inneren Randes befindet, und dass das Einsatzstück ringförmig ausgebildet ist, ein den Vorsprung aufnehmendes Loch aufweist, den Vorsprung umgreift und die inneren Anschlagflächen ausbildet.

Im Gegensatz zu dem vorbekannten Schraubteil ist nun nicht eine Aukahmebohrung vorgesehen, vielmehr hat das Hauptstück genau das Gegenteil, nämlich einen Vorsprung. Der Vorsprung springt vom Boden nach oben, zum freien Endbereich hin vor. In Radialrichtung hat der Vorsprung kleinere Abmessungen als der innere Rand. Er bildet nicht den inneren Rand aus. Der innere Rand wird durch das Einsatzstück gebildet, das bei der Montage, auf den Vorsprung aufgeschoben und mit diesem dauerhaft verbunden wird. Durch unterschiedliche Ausrichtung ein und desselben Einsatzstücks relativ zum Hauptstück werden unterschiedliche Verschlüsselungen erreicht, beispielsweise kann man so z.B. 22 unterschiedliche Winkelpositionen vorgeben und entsprechend viele Verschlüsselungen erzielen.

Auf Grund des Vorsprungs werden nun der Kopf, der Schaft und der Schraubbereich nicht mehr geschwächt, dadurch kann der Kopf kürzer und der Boden näher dem Schraubbereich sein, das Schraubteil also kürzer ausgebildet sein als nach dem Stand der Technik. Damit wird Gewicht gespart. Das eingesparte Gewicht ist so, das man ein Gesamtgewicht des fertigen diebstahlgesicherten Schraubteils erreicht, das der Normalmutter bzw. Normalschraube entspricht. Dadurch wird insgesamt an Masse gespart, was dem Fahrverhalten des Kraftfahrzeugs zu gute kommt. Bekanntlich sind Masseneinsparungen bei den Rädern noch wirksamer als Masseneinsparungen bei der Karosserie.

Die Erfindung bezieht sich auch auf ein Verfahren zum Herstellen eines derartigen diebstahlgesicherten Schraubteils. Bei dem Verfahren zur Herstellung wird das Einsatzstück auf den Vorsprung aufgesteckt und mittels eines Hilfswerkzeugs, das mit dem späteren Schlüssel weitgehend baugleich ist, fixiert. Fixiert wird also die Winkelposition zwischen Einsatzstück und Hauptstück. In diesem Zustand wird nun der Vorsprung verformt. Alternativ wird der Vorsprung in geeigneter Weise dauerhaft fest mit dem Vorsprung verbunden, dies kann beispielsweise durch Schweißen erfolgen. Vorteilhafterweise erfolgt ein axialer Druck auf den Vorsprung, der dadurch insgesamt aufgeweitet wird und sich vollständig an die Innenwandlung des Lochs anlegt sowie oben verformt, insbesondere vernietet wird, so dass der Vorsprung das Einsatzstück wie der Kopf eines Niets übergreift. Ist die Verbindung zwischen Einsatzstück und Hauptstück erfolgt, kann das Hilfswerkzeug genommen werden. Im Unterschied zu einem späteren Werkzeug hat das Hilfswerkzeug einen freien Zugang zu dem freien Ende des Vorsprungs, so dass dieser entsprechend bearbeitet werden kann.

In einer vorteilhaften Weiterbildung ist das Loch des Einsatzstücks zylindrisch oder unrund. Ein rundes Loch ermöglicht eine Ausrichtung durch Drehen. Ein unrundes Loch ermöglicht eine Ausrichtung des Einsatzstücks und/oder eine bessere Verbindung des Einsatzstücks und des Vorsprungs. Bei unrunder Ausbildung des Lochs kann dieses beispielsweise als eine Inncnverzahnung mit n-Zähnen ausgebildet sein, so das n unterschiedliche Winkelpositionen mechanisch vorgegeben sind. Ebenso kann auch die radiale Außenfläche des Vorsprungs runde Querschnitte oder unrunde Querschnitte aufweisen. Bei unrunden Querschnitten ist die bereits beschriebene Verbindung, die höhere Drehmomente aufnehmen kann, erreichbar. Ebenso ist eine Ausrichtung möglich. Runde Löcher sind mit unrundem Querschnitt des Vorsprungs und umgekehrt kombinierbar, vorzugsweise aber sind Loch und Vorsprung rund oder in etwa gleicher Ausbildung unrund, beispielsweise verzahnt, oval oder vieleckig.

Der Vorsprung hat vorteilhafter Weise Querschnittsabmessungen, die so ausreichend groß sind, das er nicht mit einfachen Mitteln entfernt bzw. zerstört werden kann, um seinen Beitrag zur Sicherheit auszuschließen. Vorzugsweise hat er Querschnittsabmessungen von mindestens zwei Millimetern, insbesondere mindestens vier Millimetern. Ebenso ist es vorteilhaft, wenn das Einsatzstück eine Wandstärke von mindestens einem Millimeter aufweist, bei geringeren Wandstärken könnte ein Zerstören und Entfernen des Einsatzstücks zu einfach sein.

Weitere Vorteile und Merkmale der Erfindung ergeben sich aus den übrigen Ansprüchen sowie den nun folgenden Beschreibung eines nicht einschränkend zu verstehenden Ausführungsbeispiels der Erfindung, das unter Bezugnahme auf die Zeichnungen im folgenden näher erläutert wird. In dieser Zeichnung zeigen:

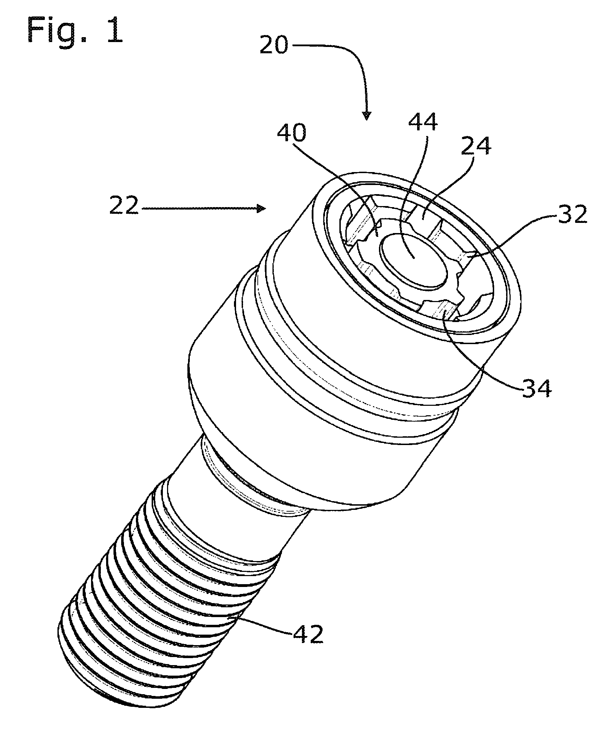

- Fig. 1:: eine perspektivische Darstellung des fertigen Schraubteils,
- Fig. 2:: eine Seitenansicht des Kopfbereichs des Schraubteils nach Figur 1, teilweise als Axialschnitt ausgeführt,
- Fig. 3:: eine Draufsicht auf den freien Endbereich des Schraubteils nach den vorangegangenen Figuren,
- Fig. 4:: ein Schnittbild wie Figur 2, jedoch nun nur für das Hauptstück und vor dem Zusammenfiigen des Hauptstücks mit dem (nicht dargestellten) Einsatzstück,
- Fig. 5:: eine Draufsicht von oben auf den freien Endbereich des Hauptstücks gemäß Figur 4,
- Fig. 6:: eine Draufsicht auf ein Einsatzstück vor dem Zusammenfügen mit dem Hauptstück,
- Fig. 7:: eine Seitenansicht des Einsatzstücks nach Figur 6,
- Fig. 8:: einen Schnitt entlang der Schnittlinie VIII - VIII in Figur 7 und
- Fig. 9:: eine Zusammenstellung mit den Teilen nach den Figuren 4 und 8 sowie weiterer Teile in Seitenansicht zur Erläuterung des Zusammenfügens von Hauptstück und Einsatzstück.

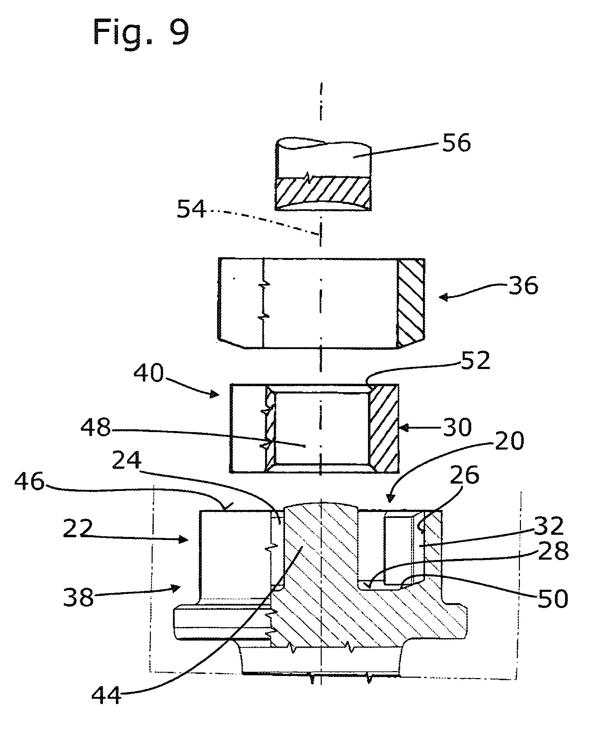

Das diebstahlgesicherte Schraubteil nach dem Ausführungsbeispiel hat die Form einer Schraube. Es hat einen freien Endbereich 20, der einen Kopf 22 des Schraubteils an einem axialen Ende abschließt. Von diesem freien Endbereich geht in axialer Richtung eine Vertiefung 24 aus, die radial von außen nach innen gesehen von einem äußeren Rand 26, einem Boden 28 und einem inneren Rand 30 begrenzt ist. Sie ist zum freien Endbereich 20 hin offen. Der äußere Rand 26 ist unrund, er hat verschlüsselt angeordnete Vorsprünge und Rücksprünge, dadurch werden äußere Anschlagflächen 35 gebildet. Ebenso hat der innere Rand 30 eine unrunde Ausbildung, er hat ebenfalls verschlüsselt angeordnete Vor- und Rücksprünge, dadurch werden innere Anschlagflächen 34 ausgebildet. Mit diesen Anschlagflächen 32, 34 ist ein hier nicht mehr dargestellter Schlüssel in Eingriff, wenn er in die Vertiefung 24 eingeschoben ist. Ein derartiger Schlüssel ist ähnlich dem Werkzeug 36 ausgebildet, das in Figur 9 dargestellt ist und während der Montage benutzt werden kann.

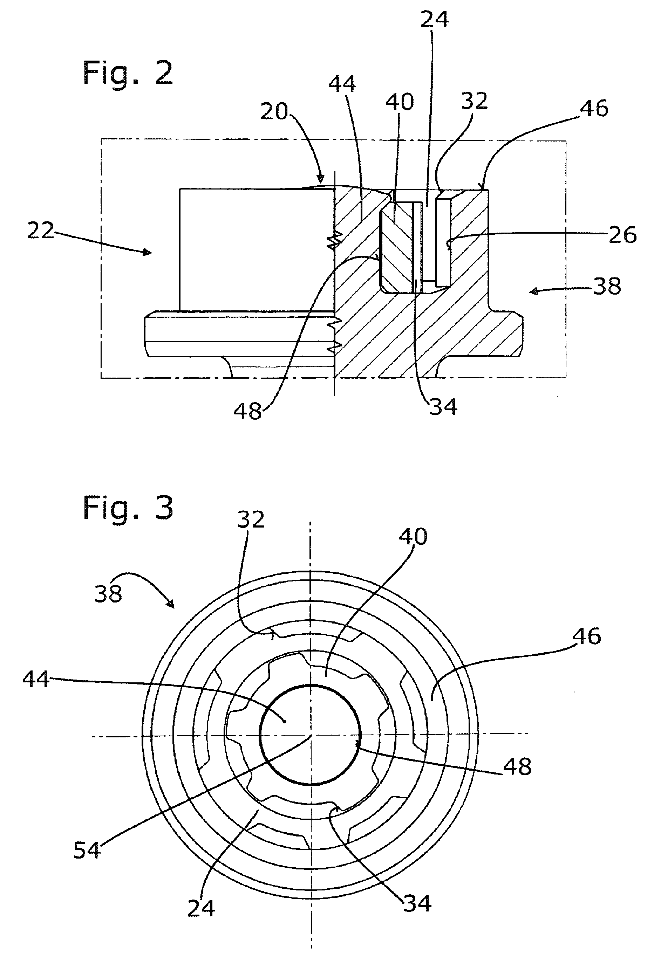

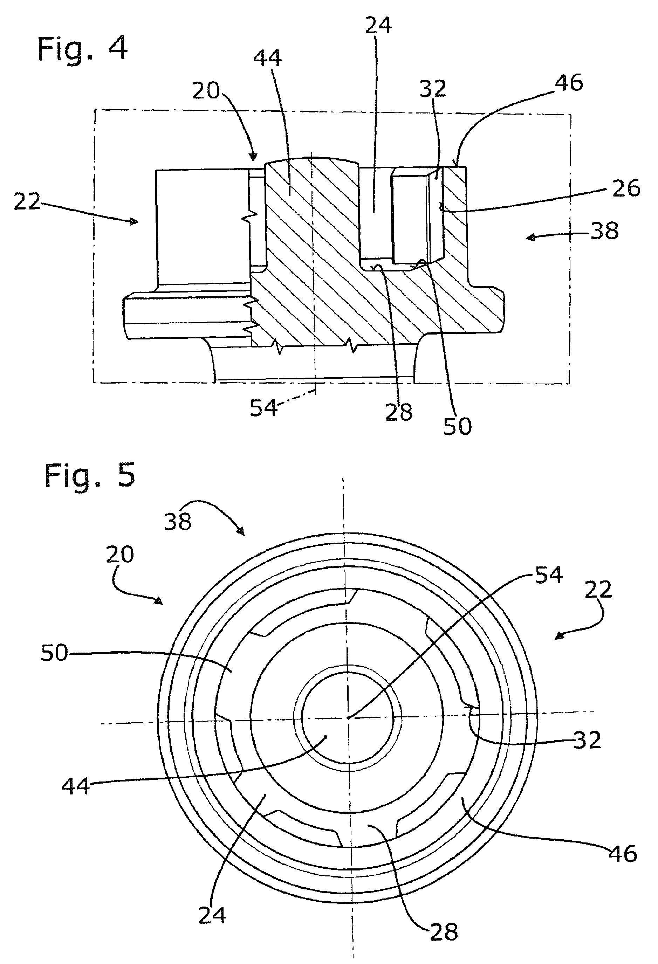

Das diebstahlgesicherte Schraubteil ist aus einem Hauptstück 38 und einem Einsatzstück zusammengesetzt. Das Hauptstück 38 bildet einen Gewindebereich 42 und wesentliche Teile des Kopfes 22 aus, jedenfalls dessen äußere Kontur. Das Hauptstück 38 bildet den äußeren Rand 26 und den Boden 28 der Vertiefung 24 aus. Schließlich bildet das Hauptstück 38 einen Vorsprung 44 aus, der in axialer Richtung verläuft. Er springt neben dem ringförmig ausgebildeten Boden 28 zum freien Endbereich 20 vor. Er springt axial weiter vor als ein Außenrand 46, und dies sowohl vor seiner Verformung (Fig. 4 und 5) als auch nach seiner Verformung (Fig. 2 und 3). Es ist allerdings auch möglich, dass der Vorsprung 44 nur vor seiner Verformung gegenüber den Außenrand 46 vorspringt oder überhaupt nicht vorspringt.

Das Einsatzstück 40 ist ringförmig. Es hat ein Loch 48, das dem Vorsprung 44 angepasst ist. Das Einsatzstück 40 kann auf den undeformierten Vorsprung 44 axial vom freien Endbereich 20 aufgeschoben werden. Die axiale Abmessung des Einsatzstücks ist kleiner als die axiale Abmessung des Vorsprungs 44. Nach dem Aufschieben des Einsatzstücks 40 auf dem Vorsprung 44 bleibt oben ein Teil des Vorsprungs 44 frei, der mechanisch verformbar ist. Es ist allerdings auch möglich, den Vorsprung 44 nicht länger als die axiale Abmessung des Einsatzstücks 40 auszubilden und die Verbindung vom Hauptstück 38 und Einsatzstück 40 ohne Vernieten durchzuführen.

Das Einsatzstück 40 bildet die innere Anschlagfläche 34 aus. Für die Verschlüsselung ist die Orientierung dieser inneren Anschlagfläche 34 zur äußeren Anschlagfläche 32 entscheidend. Wenn das Loch 38 und der Vorsprung 44 rund sind, kann das Einsatzstück 40 beliebig zum Hauptstück 38 orientiert werden. Ist es einmal ausgerichtet, kann die Verbindung erfolgen, beispielsweise durch Vernieten und/oder Aufweiten des Vorsprungs 44, sodass dieser fest an der Innenwand des Lochs 48 anliegt. Dies wird im Folgenden die Bezugnahme auf Figur 9 beschrieben.

In einer anderen, nicht dargestellten Ausführung ist das Loch 48 und/oder der Querschnitt des Vorsprungs 44 unrund. Dabei sind beliebige Formen denkbar, beispielsweise die Form eines Zahnrades, die Form eines Polygons, ovale Form oder dergleichen. Vorteilhaft ist es, wenn nur eine Ausbildung des Einsatzstücks 40 hergestellt werden muss, die für alle möglichen Verschlüsselungen verwendet werden kann, sogar gewendet eingesetzt werden kann. Es ist aber auch möglich, für jede Verschlüsselung ein spezielles Einsatzstück 40 herzustellen.

In der Darstellung nach den Figuren 2 und 3 ist das diebstahlgesicherte Schraubteil fertig gestellt. Der Vorsprung 44 ist verformt, und zwar sowohl dadurch, dass ein Nietkopf gebildet wird, der den oberen Rand des Einsatzstücks 40 formschlüssig übergreift, als auch dadurch, dass der Vorsprung 44 aufgeweitet ist und nunmehr am Einsatzstück 40 anliegt. Wie insbesondere Figur 2 zeigt, ist die innere Anschlagsfläche 34 in axialer Richtung etwas kürzer als die äußere Anschlagfläche 32. Beide können auch gegeneinander versetzt sein. Dies kann jeweils im Bereich 5% bis 20% der gesamten axialen Länge erfolgen.

In der Darstellung nach Figuren 4 und 5 ist lediglich das Hauptstück 38 vor dem Zusammenfügen dargestellt, das Einsatzstück 40 ist aus diesen beiden Figuren nicht ersichtlich. Die zylindrische Ausbildung des unverformten Vorsprungs 44 ist ersichtlich. Der Vorsprung hat oben die Form einer Kuppe. Der Vorsprung ist etwa 10% seiner Gesamtlänge länger als die entsprechende Abmessung des Hauptstücks 38, also der axiale Abstand zwischen den Außenrand 46 und dem Boden 28. Im Boden ist eine Abschrägung 50 vorgesehen, dadurch wird die Verbindung des die äußere Anschlagfläche 32 ausbildenden Rings des Hauptstücks 38 mit dem Basisbereich, der sich darunter befindet, verbessert.

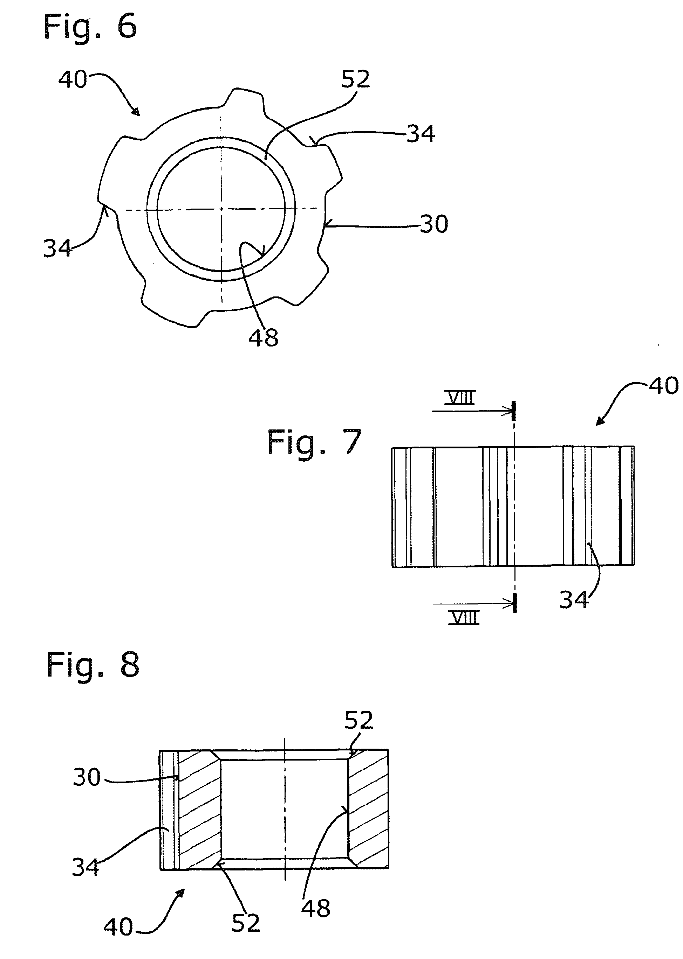

Die Figuren 6 bis 8 zeigen das Einsatzstück 40 vor dem Zusammenbau mit dem Hauptstück 38. Die Ringform des Einsatzstücks 40 ist ersichtlich. Das Einsatzstück 40 kann als Stanzteil ausgeführt sein, es kann aber auch in anderer Weise hergestellt sein. Das Loch 48 des Einsatzstücks 40 hat eine Fase 52 vorzugsweise an beiden Lochenden 48. An diese Fase legt sich beim Vernieten der verformte Endbereich des Vorsprungs 44 an. Das Einsatzstück kann in zwei unterschiedlichen Zuständen in axialer Richtung auf dem Vorsprung 44 aufgeschoben werden, dadurch werden unterschiedliche Verschlüsselungen erreicht, wenn die innere Anschlagfläche 34 entsprechend unsymmetrisch ausgebildet ist, wie dies Figur 6 darstellt.

Die Wandstärken des Einsatzstücks 40 und die Querschnittsabmessung des Vorsprungs 44 sind so bemessen, dass eine ausreichende mechanische Festigkeit erreicht wird. Vorzugsweise hat der Vorsprung Querschnittsabmessungen von mindestens 2 mm, die Wandstärke des Einsatzstücks 40 in radialer Richtung beträgt mindestens 1 mm.

Aus Figur 9 ist das Zusammenfügen des diebstahlgesichertes Schraubteils ersichtlich. Auf ein Hauptstück 38, wie es aus Figur 4 ersichtlich ist, wird ein Einsatzstück 40, das wie in den Figuren 6 bis 8 ausgeführt ist, in axialer Richtung (Achse 54) aufgesteckt. Oberhalb dieses Einsatzstücks 40 ist ein Hilfswerkzeug 36 dargestellt. Es ist entsprechend dem Hohlraum der Vertiefung 24 ausgebildet, hat also eine entsprechende axiale Abmessung, den Anschlagflächen 32 und 34 entsprechende Gegenflächen usw. Es könnte, wenn es mit einem entsprechenden Hebelarm verbunden wird, auch als Schlüssel verwendet werden. Dieses Werkzeug 36 kann vor oder nach Einsetzen des Einsatzstücks 40 in axialer Richtung eingefügt. Durch das Hilfswerkzeug 36 wird die Ausrichtung, also die Winkelposition, der beiden Stücke 38 und 40 zueinander festgelegt.

Oberhalb des Hilfswerkzeugs 36 ist ein Stempel 56 dargestellt, der mit einer geeigneten Presse verbunden ist und in axialer Richtung wirkt. Er verformt den Vorsprung 44 so, dass ein Vernieten und Aufweiten stattfindet, so dass letztendlich der Zustand gemäß Figur 2 erreicht wird.

## Patentansprüche

1. Diebstahlgesichertes Schraubteil in Form einer Mutter oder einer Schraube, das einen freien Endbereich (20) und eine an diesem Endbereich (20) ausgebildete, ringförmig verlaufende Vertiefung (24) für den Eingriff eines Schlüssels zum Drehen des Schraubteils aufweist, welche Vertiefung (24) von radial außen nach radial innen gesehen von einem äußeren Rand (26), einem Boden (28) und einem inneren Rand (30) begrenzt ist, wobei der äußere Rand (26) äußere Anschlagflächen (32) und der innere Rand (30) innere Anschlagflächen (34) für den Schlüssel ausbildet und das Schraubteil zusammengesetzt ist aus einem Hauptstück (38) und einem Einsatzstück (40), **dadurch gekennzeichnet, dass** das Hauptstück (38) einen Vorsprung (44) aufweist, der sich innerhalb des inneren Randes (30) befindet, und dass das Einsatzstück (40) ringförmig ausgebildet ist, ein den Vorsprung (44) aufnehmendes Loch (48) aufweist, den Vorsprung (44) umgreift und die inneren Anschlagflächen ausbildet.

2. Diebstahlgesichertes Schraubteil nach Anspruch 1, **dadurch gekennzeichnet, dass** der Vorsprung (44) zumindest an seinem freien Ende verformt ist und das Einsatzstück (40) übergreift.

3. Diebstahlgesichertes Schraubteil nach Anspruch 1 oder 2, **dadurch gekennzeichnet, dass** der Vorsprung (44), bevor das Einsatzstück (40) montiert ist, Abmessungen aufweist, die kleiner als die Abmessungen des Loch (48)sind und ein Aufstecken des Einsatzstücks (40) auf den Vorsprung (44) ermöglichen.

4. Diebstahlgesichertes Schraubteil nach einem der Ansprüche 1 bis 3, **dadurch gekennzeichnet, dass** das Loch (48) des Einsatzstücks (40) zylindrisch oder unrund ist.

5. Diebstahlgesichertes Schraubteil nach einem der Ansprüche 1 bis 4, **dadurch gekennzeichnet, dass** das Einsatzstück (40) eine axiale Länge hat, die Kleiner ist als die axiale Länge des Vorsprungs (44), vorzugsweise mindestens 5% Kleiner ist als die axiale Länge des Vorsprungs (44), insbesondere eine ausreichende Überlänge für ein Vernieten aufweist.

6. Diebstahlgesichertes Schraubteil nach einem der Ansprüche 1 bis 5, **dadurch gekennzeichnet, dass** der Vorsprung (44) Querschnittsabmessungen von mindestens 2mm aufweist.

7. Diebstahlgesichertes Schraubteil nach einem der Ansprüche 1 bis 6, **dadurch gekennzeichnet, dass** das Einsatzstück (40) ein Stanzteil ist.

8. Diebstahlgesichertes Schraubteil nach einem der Ansprüche 1 bis 7, **dadurch gekennzeichnet, dass** das Einsatzstück (40) mit dem Vorsprung (44) formschlüssig und/oder reibschlüssig verbunden ist.

9. Diebstahlgesichertes Schraubteil nach einem der Ansprüche 1 bis 8, **dadurch gekennzeichnet, dass** das Einsatzstück (40) zwei radiale Hauptflächen hat und mit der einen oder der anderen Hauptfläche voran auf den Vorsprung (44) aufschiebbar ist.

10. Diebstahlgesichertes Schraubteil nach einem der Ansprüche 1 bis 9, **dadurch gekennzeichnet, dass** der Vorsprung (44) mechanisch so verformt ist, das er im verformten Zustand das Loch (48) des Einsatzteils ausfüllt.

11. Diebstahlgesichertes Schraubteil nach einem der Ansprüche 1 bis 10, **dadurch gekennzeichnet, dass** das Einsatzstück (40) eine Wandstärke von mindestens 1mm aufweist.

12. Diebstahlgesichertes Schraubteil nach einem der Ansprüche 1 bis 11, **dadurch gekennzeichnet, dass** das Einsatzstück (40) unrund ist, insbesondere dass das Einsatzstück (40) und der Vorsprung (44) jeweils ein n-Eck sind und das Einsatzstück (40) in n unterschiedlichen Winkelpositionen gegenüber dem Ansatz orientierbar ist.

13. Verfahren zur Herstellung eines diebstahlgesichertes Schraubteil nach einem der Ansprüche 1 bis 12, **dadurch gekennzeichnet, dass** das Einsatzstück (40) auf den Vorsprung (44) aufgesteckt und mittels eines Hilfswerkzeugs, das mit dem späteren Schlüssel vorzugsweise baugleich ist, fixiert wird, dass in diesem Zustand nun der Vorsprung (44) verformt wird, insbesondere aufweitet und/oder vernietet wird, und dass das Hilfswerkzeug entfernt wird.

## Claims

1. Theft-protected screw part in the form of a nut or a screw, comprising a free end portion (20) and an annularly extending depression (24) formed on this end portion (20) for the engagement of a wrench to rotate the screw part, which depression (24) is limited, as seen radially from the outside to, radially, the Inside, by an outer edge (26), a bottom (28) and an inner edge (30), wherein the outer edge (26) forms outer stop faces (32) and the inner edge (30) forms inner stop faces (34) for the wrench, and the screw part is composed of a main part (38) and an insert (40), **characterised in that** the main part (38) comprises a projection (44) located within the inner edge (30), and that the insert (40) is formed in an annular manner, comprises a hole (48) receiving the projection (44), grasps around the projection (44) and forms the inner stop faces.

2. Theft-protected screw part according to claim 1, **characterised In that** the projection (44) is deformed at least on its free end and reaches over the insert (40).

3. Theft-protected screw part according to claim 1 or 2, **characterised in that** the projection (44), before the insert (40) is mounted, has dimensions that are smaller than the dimensions of the hole (48) and make it possible to fit the insert (40) onto the projection (44).

4. Theft-protected screw part according to any one of the claims 1 to 3, **characterised in that** the hole (48) of the insert (40) is cylindrical or non-circular.

5. Theft-protected screw part according to any one of the claims 1 to 4, **characterised in that** the insert (40) has an axial length smaller than the axial length of the projection (44), preferably smaller by at least 5% than the axial length of the projection (44), and in particular has sufficient excess length for riveting.

6. Theft-protected screw part according to any one of the claims 1 to 5, **characterised in that** the projection (44) has cross-sectional dimensions of at least 2 mm.

7. Theft-protected screw part according to any one of the claims 1 to 6, **characterised in that** the insert (40) is a stamped part.

8. Theft-protected screw part according to any one of the claims 1 to 7, **characterised in that** the insert (40) is connected to the projection (44) by positive fit and/or frictional fit.

9. Theft-protected screw part according to any one of the claims 1 to 8, **characterised in that** the insert (40) comprises two radial main surfaces and can be pushed onto the projection (44) with the one or the other main surface going first.

10. Theft-protected screw part according to any one of the claims 1 to 9, **characterised in that** the projection (44) is mechanically deformed in such a way that, in the deformed state, it fills the hole (48) of the insert.

11. Theft-protected screw part according to any one of the claims 1 to 10, **characterised in that** the insert (40) has a wall thickness of at least 1 mm.

12. Theft-protected screw part according to any one of the claims 1 to 11, **characterised in that** the insert (40) is non-circular, in particular, that the insert (40) and the projection (44) each are an n-gon, and that the insert (40) can be oriented relative to the shoulder in n different angular positions.

13. Method for producing a theft-protected screw part according to any one of the claims 1 to 12, **characterised in that** the insert (40) is fitted onto the projection (44) and is fixed by means of an auxiliary tool which is preferably identical in construction to the future wrench, that the projection (44) is now deformed in this state, in particular widened and/or riveted, and that the auxiliary tool is removed.

## Revendications

1. Elément de vissage antivol sous forme d'un écrou ou d'une vis, qui présente une zone d'extrémité libre (20) et un creux (24) s'étendant de façon annulaire ménagé sur cette zone d'extrémité (20) et destiné à l'engagement d'une clé pour tourner ledit élément de vissage, ledit creux (24) - vu radialement de l'extérieur vers l'intérieur - est délimité par un bord extérieur (26), par un fond (28) et par un bord intérieur (30), ledit bord extérieur (26) formant des surfaces extérieures de butée (32) et ledit bord intérieur (30) formant des surfaces intérieures de butée (34) pour ladite clé, et ledit élément de vissage étant composé d'une pièce principale (38) et d'une pièce à insérer (40), **caractérisé par le fait que** ladite pièce principale (38) présente une projection (44) qui est située à l'intérieur du bord intérieur (30) et que ladite pièce à insérer (40) est réalisée de façon annulaire, présente un trou (48) logeant ladite projection (44), entoure ladite projection (44) et forme les surfaces intérieures de butée.

2. Elément de vissage antivol selon la revendication 1, **caractérisé par le fait que** ladite projection (44), au moins à son extrémité libre, est déformée et chevauche ladite pièce à insérer (40).

3. Elément de vissage antivol selon la revendication 1 ou 2, **caractérisé par le fait que**, avant que ladite pièce à insérer (40) soit montée, ladite projection (44) présente des dimensions qui sont inférieures aux dimensions dudit trou (48) et permettent de rapporter ladite pièce à insérer (40) sur ladite projection (44).

4. Elément de vissage antivol selon l'une quelconque des revendications 1 à 3, **caractérisé par le fait que** ledit trou (48) de la pièce à insérer (40) est cylindrique ou non rond.

5. Elément de vissage antivol selon l'une quelconque des revendications 1 à 4, **caractérisé par le fait que** ladite pièce à insérer (40) présente une longueur axiale qui est inférieure à la longueur axiale de la projection (44), de préférence au moins 5 % plus petite que la longueur axiale de la projection (44), en particulier présente une surlongueur suffisante pour un rivetage.

6. Elément de vissage antivol selon l'une quelconque des revendications 1 à 5, **caractérisé par le fait que** la projection (44) présente des dimensions de section d'au moins 2 mm.

7. Elément de vissage antivol selon l'une quelconque des revendications 1 à 6, **caractérisé par le fait que** ladite pièce à Insérer (40) est une pièce de découpage.

8. Elément de vissage antivol selon l'une quelconque des revendications 1 à 7, **caractérisé par le fait que** ladite pièce à insérer (40) et la projection (44) sont liées entre elles à engagement positif et/ou par friction.

9. Elément de vissage antivol selon l'une quelconque des revendications 1 à 8, **caractérisé par le fait que** ladite pièce à insérer (40) présente deux surfaces principales radiales et peut être emmanchée, l'une ou l'autre face principale en tête, sur ladite projection (44).

10. Elément de vissage antivol selon l'une quelconque des revendications 1 à 9, **caractérisé par le fait que** ladite projection (44) est déformée mécaniquement de telle sorte que, en état déformé, elle comble le trou (48) de la pièce à Insérer.

11. Elément de vissage antivol selon l'une quelconque des revendications 1 à 10, **caractérisé par le fait que** ladite pièce à insérer (40) présente une épaisseur de paroi de 1 mm au moins.

12. Elément de vissage antivol selon l'une quelconque des revendications 1 à 11, **caractérisé par le fait que** ladite pièce à insérer (40) est non ronde, que, en particulier, ladite pièce à insérer (40) et ladite projection (44) sont chacune un polygone à n angles et ladite pièce à insérer (40) peut être orientée dans n positions angulaires différentes par rapport à la saillie.

13. Procédé de fabrication d'un élément de vissage antivol selon l'une quelconque des revendications 1 à 12, **caractérisé par le fait que** ladite pièce à insérer (40) est rapportée sur ladite projection (44) et est fixée au moyen d'un outil auxiliaire qui, de préférence, est de construction identique à celle de la future clé, que, dans cet état, ladite projection (44) est alors déformée, en particulier élargie et/ou rivetée, et que ledit outil auxiliaire est retiré.
